# EUROPEAN PATENT SPECIFICATION

(11) **EP 0 337 736 B1**
(45) Date of publication and mention of the grant of the patent: **08.06.1994**
(21) Application number: 89303573.3
(22) Date of filing: 11.04.1989
(51) Int. Cl.: G21C 7/10, G21C 7/24

(54) **Nuclear reactor control rod having an extended service life**
Kernreaktorregelstab mit verlängerter Lebensdauer
Barre de contrôle d'un réacteur nucléaire ayant une durée de vie prolongée

(30) Priority: 14.04.1988 US 181611
(43) Date of publication of application: 18.10.1989
(73) Proprietor: GENERAL ELECTRIC COMPANY, Schenectady, NY 12345 (US)
(72) Inventor: Charnley, James Edward, Gilroy California 95020 (US); Van Diemen, Paul, San Jose California 95120 (US)
(74) Representative: Pratt, Richard Wilson

(56) References cited:
- EP-A- 0 130 483
- DE-C- 2 953 818
- US-A- 3 485 717
- US-A- 3 712 852

## Description

This invention relates to a control rod construction providing a long service life in use in nuclear reactors having a core of fissionable fuel producing high neutron flux densities.

Commercial nuclear fission reactors for generating power normally comprise a core of fissionable fuel wherein the fuel material is sealed within a tube-like metal container. These tubular containers with the fuel are arranged or grouped in discrete bundles or units, which frequently are enclosed within an open ended housing known as a "channel" in the nuclear fuel industry. The discrete fuel bundles are assembled for service within a nuclear reactor to provide the core in predetermined patterns. The assembled bundles are spaced apart from each other so as to provide intermediate gaps between each bundle, forming a surrounding open area for the flow of coolant thereabout and also the insertion of reactor control means comprising neutron absorbing material.

Nuclear reactor control means typically consist of components containing neutron absorbing compositions which are reciprocally movable in relation to the core body of neutron emitting fuel undergoing fission. The rate of the fission reaction, and in turn heat generated, is regulated by governing the availability of fission produced neutrons for furthering the reaction and determining its magnitude.

In a conventional nuclear reactor, fissionable atoms such as uranium isotopes and plutonium absorb neutrons in their nuclei and undergo a nuclear disintegration or splitting. This fission produces on the average of two products of lower atomic weight and greater kinetic energy, and typically two or three neutrons, also of high energy.

The fission neutrons thus produced diffuse through the core containing fissionable fuel and they are either utilized or lost in several distinct completing mechanisms. Some neutrons may migrate to the boundaries of the core and escape whereby they are lost from the system. Some neutrons undergo nonfission or radiative capture in the fuel material. Other neutrons undergo fission captive within the fissionable fuel and thereby produce additional fission neutrons, the so-called chain reaction. Namely, fast neutrons are captured in the uranium 235 and 238, while thermal neutrons are captured in uranium 235. Still other neutrons undergo parasitic capture in the various extraneous or nonfissionable compositions of the core and adjoining components such as the moderator, coolant, various structural materials, fission products produced within the fuel, as well as the reactor control elements.

The balance between the fission production of neutrons and the various competing mechanisms for neutron consumption determines whether the fission reaction is self-sustaining, decreasing, or increasing. When the fission reaction is self-sustaining, the neutron multiplication factor equals 1.00, the neutron population remains constant, and on average there is one neutron remaining from each fission event which induces a subsequent fission of an atom.

Heat produced by the fission reactions is thereby continuous and is maintained as long as sufficient fissionable material is present in the fuel system to override the effects of fission products formed by the reaction, some of which have a high capacity for absorbing neutrons. The heat produced by the fission reaction is removed by a coolant such as water, circulating through the core in contact with the tubular containers of fuel and conveyed on to means for its utilization, such as the generation of electrical power.

The neutron population, and in turn the heat or power produced, of a nuclear reactor depends on the extent to which neutrons are consumed or wasted by capture in nonfissionable material. Neutron consumption of this nature is regulated by governing the relative amount of neutron absorbing control material imposed into the core of fissionable fuel undergoing fission reactions.

Control devices comprised of elements containing neutron absorbing material, are commonly provided in the form of rods, sheets or blades. The elements are provided with mechanical or fluid operated means for reciprocal movement into and out from the core of fissionable fuel to any appropriate extent or depth for achieving the desired neutron population and in turn level of reaction.

Common neutron absorbing materials include elemental or compound forms of boron, cadmium, gadolinium, europium, erbium, samarium, hafnium, dysprosium, silver and mercury.

Commercial nuclear reactors for power generation are of such a magnitude that the control means, or system, comprises a plurality of control units or rods. Each individual control unit or rod has one or more elements which are selectively and reciprocally insertable to variable degrees of penetration into the fuel core by movement along a path intermediate the discrete bundles of grouped tubular fuel containers through the space or gaps provided in the assembly of multiple fuel bundles. A common design for control rods, as shown in U.S. Patent US-A-. 3,020,888, consists of an element having four blades, comprising sheaths containing neutron absorbing material, having a cross or cruciform cross section whereby the four blades radially project at right angles to each other. With this design configuration, each control rod element is insertable into the space between four adjacent fuel bundles of the core assembly, and regulates the neutron flux or density emitted from the fissioning fuel of the four bundles.

The construction designs, materials, operating mechanisms and functions of typical control means for water cooled and moderated nuclear fission reactors for commercial power generation are illustrated and described in detail in the prior art, for example, U.S. Patents No. 3,020,887; No. 3,020,888; No. 3,217,307; No. 3,395,781; No. 3,397,759; No. 4,285,769; No. 4,624,826; and No. 4,676,948, and elsewhere throughout the literature dealing with nuclear reactors. The contents of the foregoing prior art patents are incorporated herein by reference.

EP-A-0130483 relates to a control rod for a nuclear reactor in which neutron absorbing rods are surrounded with a second neutron absorber which differs in material from the neutron absorbing rods, in order to provide a control rod with a long lifetime.

U.S.-A-3485717 relates to neutron absorbing, tube-type control elements for use in a nuclear reactor, which are used in a cluster or cruciform array, different tubes having different neutron absorption material to present different cross-sectional absorption properties to the energy spectrum of neutrons.

U.S.-A-3712852 relates to a control rod assembly for a nuclear reactor which is comprised of a plurality of elongate members of selected cross-section which are coplanar and parallel to form a blade or slab. The individual members are of a neutron absorbing material and are spaced such that water can flow between the members. The arrangement provides an inexpensive control rod design and permits a wider choice of absorber materials for use in the control rod.

Nevertheless, improvements in control devices for nuclear fission reactors are desirable, in particular to provide for selective designing of the neutron absorbing capacity of the control rod throughout its cross-section.

The present invention provides a control device for a nuclear fission reactor having a core of fissionable fuel in an assembly composed of fuel units grouped into spaced apart bundles, and said control device is provided with means for reciprocal movement into and out from the core of fuel intermediate the spaced apart bundles of the assembly, said control device having a frame including an upper and a lower support member connected by at least one elongated member extending therebetween, and a plurality of aligned parallel, elongated units comprising neutron absorbing material each extending from said upper support member to said lower support member, said plurality of elongated units comprising neutron absorbing material being arranged in an alternating pattern of units having neutron absorbing material consisting essentially of hafnium and units having neutron absorbing material consisting essentially of boron carbide.

In the accompanying drawings:
Figure 1 is a perspective view of a control device with part cut away;
Figure 2 is a cross sectional view of a blade of the control element of Figure 1 taken along the line 1 - 1;
Figure 3 is a cross sectional view of a blade of the control element of Figure 1 taken along the line 1 - 1, and showing another arrangement;
Figure 4 is a cross sectional view of a blade of the control element of Figure 1 taken along the line 1 - 1, and showing a different arrangement;
Figure 5 is a cross sectional view of a blade of the control element of Figure 1 taken along the line 1 - 1, and showing a still different arrangement of the invention.
Figure 6 is a cross sectional view of a blade of the control element of Figure 1 taken along the line 1 - 1, and showing a different structural embodiment of the invention, and
Figure 7 is a fragmentary view, the part broken away, showing an alternate embodiment of the invention.

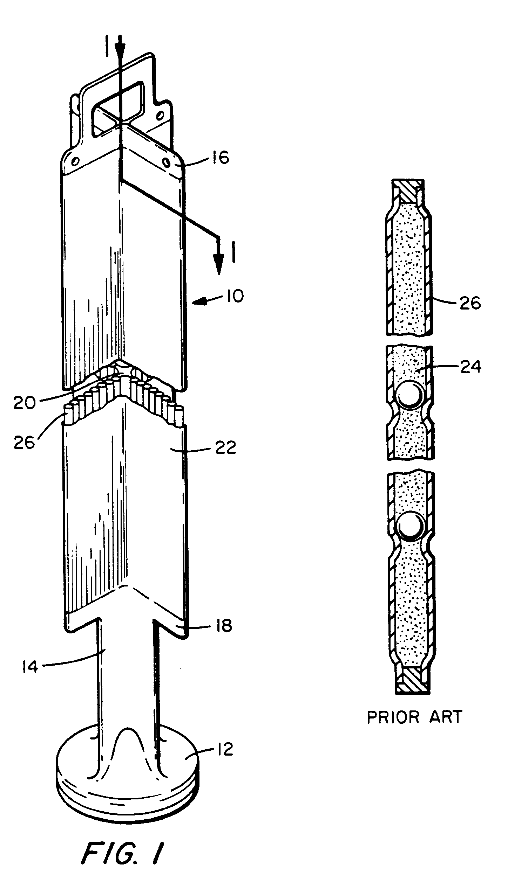

Referring to Figure 1 of the drawings, this invention is hereinafter described and illustrated with reference to a common commercial design for nuclear fission reactor control devices wherein the control elements are generally cruciform is cross section, and the preferred embodiment. Control devices with cruciform control elements and their utilization with fuel core assemblies are shown and described in the prior art comprising the above cited U.S. Patents.

A typical prior control device 10 comprises a base 12 which is coupled to a suitable control device drive mechanism (not shown) and supports a frame 14 including an upper support member 16 and a lower support member 18 and an elongated central spine support 20, or tie rod, connecting said upper and lower support members 16 and 18. Upper support member 16 can also function as a handle to facilitate transportation and manipulation of the device.

In a preferred cruciform embodiment of this invention, the upper and lower support members 16 and 18, respectively, each comprise four radially extending arms projecting at about 90 degrees with respect to adjacent arms to form the cross. The central spine support 20, connecting the upper and lower support member 16 and 18 of the prior design, is preferably also of a cruciform configuration with four abbreviated arms of relatively short radial extension in relation to the arms projecting from the upper and lower support members 16 and 18.

The four radially extending arms projecting from the upper and lower support members 16 and 18, and when used, the four abbreviated radial arms of the central spine support 20, are each respectively aligned in a plane with their counterpart to provide a cross configuration. The four arms of the upper and lower support members 16 and 19 are also substantially conterminous with respect to each other.

A metal sheath 22, extends from each arm of the upper support 16 to each respective counterpart arm of the lower support 18 and adjoins the central elongated spine support 20 along its length in the standard prior art design. Sheath 22 typically comprise a U-shaped sheet metal housing of blade-like configuration and an internal width comparable to the thickness of the arms of the upper and lower supports. Preferably each sheath is secured to its respective adjoining arms of the upper and lower support members 16 and 18, and also to the central support 20, by suitable means such as welding.

The foregoing structure of the control device for this invention is typical of common commercial control means which have been in service for operating nuclear reactors. The structure of the foregoing frame 14 and its components are normally constructed of stainless steel or similar corrosion resisting metals.

In accordance with this invention, the neutron absorbing components of the control device comprises a combination of boron carbide with another neutron absorbent in a unique arrangement of alternating units within the control element.

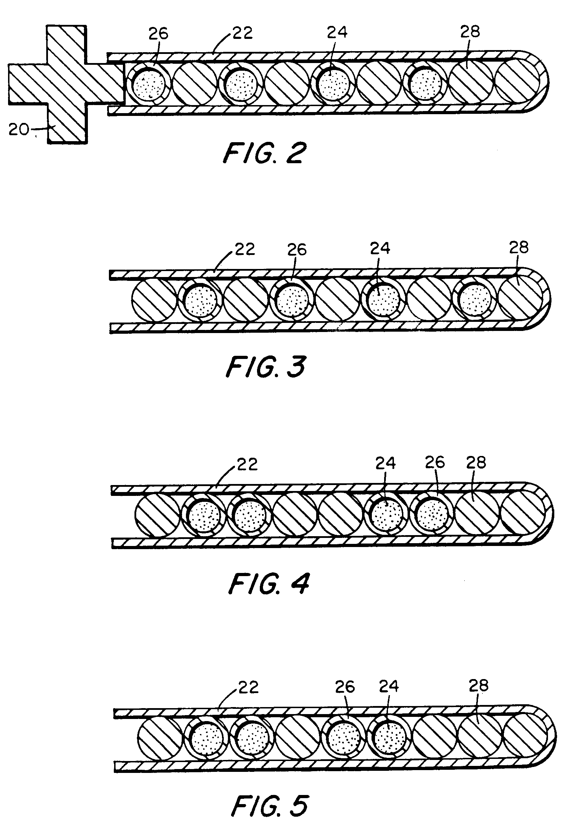

Referring to the drawings, the neutron absorbing element of the control device 10 comprises a plurality of discrete rod-like units, which can be housed with sheath 22, extending substantially from the upper support 16 to lower support 18, and comprise alternating neutron absorbing compositions. As shown in the cross section illustrations of Figures 2, 3, 4 and 5, alternating units, or multiples thereof, comprise particulate boron carbide neutron absorbent 24 contained within tubes 26, and bars or cylinders of metallic hafnium 28.

The particulate boron carbide absorbent can be contained within the tube 26 as described and shown in U.S-A-. 4,285,769. Namely, the particulate boron carbide material is segmented within a sealed cylindrical tube 26 and retained therein by means of a series of spaced intervening balls which are restricted in their movement along the length of the tube by a series of spaced crimps in the wall of the tube 26. This arrangement aids in preventing voids in the column of particulate material.

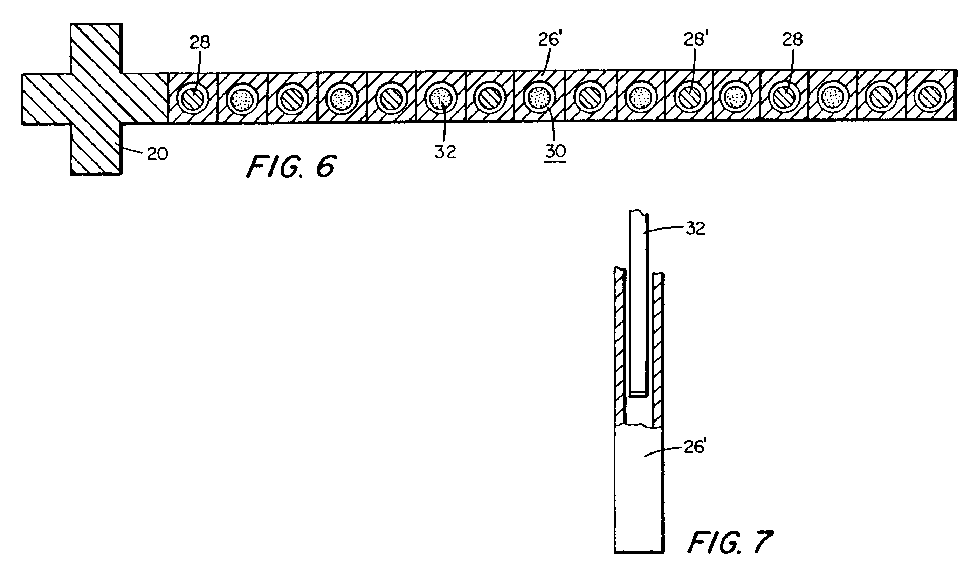

However, a preferred embodiment for the practice of this invention comprises the use of hollow tube elongated members 26¹ having a generally angular external cross section configuration, such as square as shown in Figure 6, with a longitudinal cavity 30 of cylindrical internal cross section extending the length thereof. The cylindrical cavity provides means for the retention of particulate neutron absorbent material. In this embodiment the particulate absorbent material is enclosed within a plurality of sealed tubular containers or canisters 32, preferably comprising thin walled tube sections of a diameter slightly smaller than the internal diameter of the cavity 30 of hollow tube 26¹. The sealed tubular containers 32, including particulate neutron absorbent material, are deposited within the cylindrical cavity 30 of square hollow tube 26¹ in a column, as shown in Figure 7.

This arrangement of a plurality of individual containers 32, as well as precluding voids occurring in the column of neutron absorbent, also prevents large losses of the particulate material from the unit in the event of a breach of a tube.

Externally generally square tubes 26¹ provide for ease of affixing each tube with its adjoining parallel units, such as by welding, to form a substantially continous monolithic body including the interspersed hafnium bars 28¹, which are also enclosed in hollow member tubes 26¹ of generally square or rectangular cross section. The hafnium metal neutron absorbent 28 is preferably in the form of cylindrical bar. This joining of the aligned parallel tubes 26¹ into a single monolithic body provides an integrated blade-like member of the cruciform control element which incorporates a designed arrangement of alternating absorbent units in accordance with this invention.

The ends of square tubes 26¹ can further be affixed, such as by welding, to each the upper support member 16 and the corresponding lower support member 18. This arrangement substantially simplifies the overall central device element since it enables the elimination of the need of both the sheath 22 and the central elongated spine support 20 with the united tubes 26¹ performing the function of each.

However, it is preferred that when the central spine support 20 is excluded in this embodiment, that it is replaced by several spacers of comparable cruciform configuration arranged at intervals to provide ample structural rigidity and strength.

The alternating units of neutron absorbing material can be arranged in varying patterns to customize the neutron absorption capacity of the element to match or equate the uneven neutron flux conditions typically encountered within the fuel core of nuclear reactors. For examples, as shown in Figures 2 and 6, the units of boron carbide 24 and hafnium metal 28 are alternated one for one, except for the use of two adjoining units of hafnium metal 28 at the outermost extremity of the sheath or blade edge. This arrangement concentrates the more lasting absorption capacity of hafnium in the area of highest neutron flux density.

Figure 3 illustrates a uniform or symmetrical alternating series of one unit of boron carbide 24 with one unit of hafnium metal 28.

Figure 4 illustrates a pattern of alternating series of groups of units of boron carbide 24 and hafnium metal 28, namely groups of two.

Figure 5 illustrates an asymmetrical alternating series of groups of one type, for example, double units of boron carbide 24, with individual units of the other type, for example single units of hafnium metal 28, and concentration of units of lasting absorption capacity comprising hafnium metal 28 at the extremity. Any number of alternating units can be utilized in this system, depending upon the requirements of a given reactor core design and size. For example, some commercial reactors would employ between 10 and 24 alternating units, with one particular embodiment including 17 units for each "blade" of the cruciform element.

The combinations of alternating rod units of boron carbide with hafnium metal within the control device element provide significant advantages in the most effective utilization of the distinctive attributes of each. For instance, with the relatively low cost and light weight boron carbide, each molecule thereof is normally depleted upon the absorption of a single neutron. Thus, boron carbide is rapidly expended in this function when subjected to high neutron flux densities notwithstanding a high neutron absorption capacity on a weight basis. Unlike boron carbide, costly and extremely heavy hafnium metal has six stable isotopes whereby its molecules do not deplete upon each absorption of a neutron, but simply transmutate from isotope to isotope with each absorption. Thus, the hafnium metal component of the control device maintain an effective neutron absorption capacity providing long service life even when subjected to high neutron flux densities.

Moreover, the flexibility of the alternating combinations of boron carbide with hafnium metal of this invention enables easy customizing of the elements and control device to match or equate the absorption capacity of the unit to the neutron flux conditions encountered in a particular service. This provides for maximum efficiency without incurring the use of any excess of absorbent material costs or weight.

There has thus been described in the foregoing an improved control device for nuclear fission reactors having a longer service life. It is relatively uniform in its neutron absorption capacity over extended periods of service whereby the fission reaction, and in turn power generation in the fuel adjacent thereto, remains substantially constant.

The control device can be easily customized to match or equate its neutron absorption capacity along the length of the radial reach of the blade element to the varying neutron flux conditions encountered across the adjacent area intermediate the fuel bundles. Moreover it incorporates a combination of different materials and thereby provides maximum attributes including more uniform and constant performance in its function and at a practical weight and feasible costs.

This invention also includes the use of other long life neutron absorbent compositions as substitutes for hafnium metal for alternating combinations with boron carbide. Alternative long life neutron absorbents as replacements for hafnium include other rare earth materials or their oxides and mixtures thereof, such as dysprosium oxide and europium oxide, and the like equivalents. These rare earth oxides can be used in the form of high density pellets or the like bodies stacked end to end to occupy the same volume as the hafnium rods described. These alternative systems provide the same maximum efficiency as the hafnium and boron carbide combinations.

## Claims

1. A control device (10) for a nuclear fission reactor having a core of fissionable fuel in an assembly composed of fuel units grouped into spaced apart bundles, and said control device is provided with means for reciprocal movement into and out from the core of fuel intermediate the spaced apart bundles of the assembly, said control device having a frame including an upper (16) and a lower (18) support member connected by at least one elongated member (20) extending therebetween, and a plurality of aligned parallel, elongated units (26) comprising neutron absorbing material each extending from said upper support member (16) to said lower support member (18), said plurality of elongated units comprising neutron absorbing material which is arranged in an alternating pattern of units (28) having neutron absorbing material consisting essentially of hafnium and units (24,30) having neutron absorbing material consisting essentially of boron carbide.

2. The control device of claim 1, wherein the plurality of aligned parallel, elongated units comprising neutron absorbing material include alternating units of hollow tubes containing a neutron absorbing material consisting essentially of hafnium and hollow tubes containing a neutron absorbing material consisting essentially of boron carbide.

3. The control device of claim 1, wherein the plurality of aligned parallel, elongated units comprising neutron absorbing material include a pattern of alternating groups of units of hollow tubes containing a neutron absorbing material consisting of hafnium and hollow tubes containing a neutron absorbing material consisting essentially of boron carbide.

4. The control device of claim 1, wherein the plurality of aligned parallel, elongated units comprising neutron absorbing material include a pattern of alternating series of a unit of a hollow tube containing a hafnium bar and a unit of a hollow tube containing a neutron absorbing material consisting essentially of boron carbide.

5. The control device of any preceding claim wherein each unit comprises a hollow tube, square in external cross-section.

## Patentansprüche

1. Regelgerät (10) für eine Kernspaltungsreaktor mit einem Kern aus spaltbarem Brennstoff in einer Baueinheit, die aus Brennstoffeinheiten zusammengesetzt ist, die in beabstandete Bündel bzw. Elemente gruppiert sind, wobei das Regelgerät mit einer Einrichtung zur reziproken Bewegung in den und aus dem Brennstoffkern zwischen den beabstandeten Bündein der Baueinheit versehen ist, das Regelgerät einen Rahmen aufweist, der ein oberes (16) und ein unteres (18) Trägerteil einschließt, die durch mindestens ein langgestrecktes Teil (20) verbunden sind, das sich dazwischen erstreckt und mit einer Vielzahl ausgerichtet paralleler, langgestreckter Einheiten (26), die Neutronen absorbierendes Material umfassen, sich jeweils vom oberen Trägerteil (16) zum unteren Trägerteil (18) erstrecken, wobei die Vielzahl langgestreckter Einheiten, die Neutronen absorbierendes Material umfassen, das in einem alternierende Muster von Einheiten (28) angeordnet ist, die Neutronen absorbierendes Material aufweisen, das im wesentlichen aus Hafnium besteht, und Einheiten (24,30), die Neutronen absorbierendes Material aufweisen, das im wesentlichen aus Borcarbid besteht.

2. Regelgerät nach Anspruch 1, worin die Vielzahl ausgerichteter paralleler langgestreckter Einheiten, die Neutronen absorbierendes Material umfassen, abwechselnde Einheiten von hohlen Rohren einschließen, die ein Neutronen absorbierendes Material enthalten, das im wesentlichen aus Hafnium besteht und hohle Rohren, die ein Neutronen absorbierendes Material enthalten, das im wesentlichen aus Borcarbid besteht.

3. Regelgerät nach Anspruch 1, worin die Vielzahl ausgerichteter paralleler langgestreckter Einheiten, die Neutronen absorbierendes Material umfassen, ein Muster abwechselnder Gruppen von Einheiten hohler Rohre einschließt, die ein Neutronen absorbierendes Material enthalten, das aus Hafnium besteht und hohler Rohre, die ein Neutronen absorbierendes Material enthalten, das im wesentlichen aus Borcarbid besteht.

4. Regelgerät nach Anspruch 1, worin die Vielzahl ausgerichteter paralleler langgestreckter Einheiten, die Neutronen absorbierendes Material umfassen, ein Muster abwechselnder Reihen einer Einheit eines hohlen Rohres, enthaltend einen Hafniumstab, und einer Einheit eines hohlen Rohres, enthaltend ein Neutronen absorbierendes Material, das im wesentlichen aus Borcarbid besteht, einschließt.

5. Regelgerät nach einem vorhergehenden Anspruch, worin jede Einheit ein hohles Rohr mit einem quadratischen Außenquerschnitt umfaßt.

## Revendications

1. Dispositif de commande (10) pour un réacteur de fission nucléaire comportant un coeur de combustible fissible sous forme d'un assemblage composé d'éléments combustibles groupés en faisceaux espacés les uns des autres, ledit dispositif de commande est pourvu de moyens destinés, par un mouvement de va et vient, à pénétrer dans le coeur de combustible, entre les faisceaux espacés l'un de l'autre de l'ensemble, et à sortir de ce coeur, le dispositif de commande précité comportant un bâti comprenant un élément de support supérieur (16) et un élément de support inférieur (18) reliés par au moins un élément allongé (20) s'étendant entre ces éléments de support, et une pluralité d'organes allongés alignés et parallèles (26) comprenant une matière absorbant les neutrons et s'étendant chacun depuis ledit élément de support supérieur (16) jusqu'au dit élément de support inférieur (18), ladite pluralité d'organes allongés comprenant une matière absorbant les neutrons qui est disposée suivant une combinaison alternée d'ensembles (28) comportant une matière absorbant les neutrons et consistant essentiellement en de l'hafnium et d'ensembles (24,30) comportant une matière absorbant les neutrons et consistant essentiellement en du carbure de bore.

2. Dispositif de commande selon la revendication 1, dans lequel la pluralité d'organes allongés alignés et parallèles comportant une matière absorbant les neutrons comprend des ensembles alternés de tubes contenant une matière absorbant les neutrons et consistant essentiellement en de l'hafnium et les tubes contenant une matière absorbant les neutrons et consistant essentiellement en du carbure de bore.

3. Dispositif de commande selon la revendication 1, dans lequel la pluralité d'organes allongés alignés et parallèles comportant une matière absorbant les neutrons comprend une combinaison de groupes alternés d'ensembles de tubes contenant une matière absorbant les neutrons et consistant en de l'hafnium et de tubes contenant une matière absorbant les neutrons et consistant essentiellement en du carbure de bore.

4. Dispositif de commande selon la revendication 1, dans lequel la pluralité d'organes allongés alignés et parallèles comprenant une matière absorbant les neutrons comprend une combinaison de séries alternées d'ensembles de tubes contenant une barre d'hafnium et un ensemble de tubes contenant une matière absorbant les neutrons et consistant essentiellement en du carbure de bore.

5. Dispositif de commande selon l'une quelconque des revendications précédentes, dans lequel chaque ensemble comprend un tube creux, de section extérieure carrée.
